# EUROPÄISCHE PATENTSCHRIFT

(11) **EP 3 870 630 B1**
(45) Veröffentlichungstag und Bekanntmachung des Hinweises auf die Patenterteilung: **11.12.2024**
(21) Anmeldenummer: 19787229.4
(22) Anmeldetag: 14.10.2019
(51) Int. Cl.: C08G 83/00, C08G 73/02, C11D 3/37

(54) **NEUARTIGE POLYALKYLENIMINDERIVATE UND WASCH- UND REINIGUNGSMITTEL, DIE SOLCHE ENTHALTEN**
NEW TYPES OF POLYALKYLENE IMINE DERIVATIVES, AND DETERGENTS AND CLEANING AGENTS CONTAINING SAME
NOUVEAUX DÉRIVÉS DE POLYALKYLÈNEIMINE ET DÉTERGENTS ET PRODUITS DE NETTOYAGE CONTENANT DE TELS DÉRIVÉS

(30) Priorität: 22.10.2018 DE 102018217984
(43) Veröffentlichungstag der Anmeldung: 01.09.2021
(73) Patentinhaber: Henkel AG & Co. KGaA, 40589 Düsseldorf (DE)
(72) Erfinder: WEDLER, Nils, 40227 Düsseldorf (DE); DREJA, Michael, 41469 Neuss (DE)
(86) Internationale Anmeldenummer: PCT/EP2019/077691
(87) Internationale Veröffentlichungsnummer: WO 2020/083680

(56) Entgegenhaltungen:
- WO-A1-2012/107379
- WO-A1-2012/107379
- WO-A1-99/67353
- WO-A1-99/67353
- US-A1- 2005 085 404
- US-A1- 2005 085 404

## Beschreibung

Die vorliegende Erfindung betrifft die Verwendung von bestimmten veresterten Polyalkylenimin-Polyalkoxylaten zur Verstärkung der Primärwasch- und -reinigungskraft von Wasch- und Reinigungsmitteln beim Waschen von Textilien oder Reinigen harter Oberflächen insbesondere gegenüber öl- und/oder fetthaltigen Anschmutzungen.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, deren Anwesenheit die Waschkraft von Tensiden verstärkt, ohne dass sie in der Regel selbst ein ausgeprägtes tensidisches Verhalten aufzuweisen müssen. Gleiches gilt sinngemäß auch für Reinigungsmittel für harte Oberflächen. Derartige Substanzen werden oft als Waschkraftverstärker oder wegen ihrer besonders ausgeprägten Wirkung gegenüber öl- oder fettbasierten Anschmutzungen als "Fat booster" bezeichnet. Aus der internationalen Patentanmeldung WO 99/49009 A1 ist der Beitrag von gegebenenfalls N-substituierten Polyalkyleniminen zur physikalischen Stabilität von HEDP-haltigen Flüssigwaschmitteln bekannt. Es ist außerdem bekannt, dass polyalkoxylierte Polyalkylenimine von Textilfasern abgelösten Schmutz in der Waschflotte suspendieren können. So offenbart beispielsweise die internationale Patentanmeldung WO 2013/17120 A1 Waschmittel, die zur Vermeidung der Wiederablagerung des Schmutzes auf die Wäschefaser Polyalkylenimine enthalten, die an maximal 3 N-Atomen eine Polyalkoxylierungs-Substitution aufweisen und die eine Endgruppe mit einem Molgewicht unter 100, insbesondere eine Methylgruppe, an der Polyalkoxy-Einheit aufweisen.

Aus der internationalen Patentanmeldung WO 2009/087523 A2 ist die Kombination von Glycosylhydrolasen mit fettablösenden polyalkoxylierten Polyalkyleniminen bekannt, die am nicht an das Polyalkylenimin gebundenen Ende der Polyalkoxy-Einheit eine C₁₋₄-Alkylgruppe tragen können.

US 2005/085404 A1 offenbart Polyalkylenimin-Alkylenoxid-Copolymere, die eine Alkylenimin-Monomereinheit mit Polyalkylenoxid umfassen und als Reinigungsmittel verwendbar sind.

WO9967353 A1 offenbart Waschmittelzusammensetzungen, die hydrophobe alkoxylierte Polyalkylenimin-Schmutzdispergiermittel enthalten, die mit einem Bleichmittel kompatibel sind.

Die vorliegende Erfindung geht von der Aufgabe aus, die Wirksamkeit von Polyalkylenimin-basierten Verbindungen zur Entfernung öl- und fetthaltigen Anschmutzungen weiter zu erhöhen.

Dies gelang durch ein Polymer, das durch Umsetzung von polyalkoxylierten Polyalkyleniminen mit Hydroxy- oder Aminoalkylcarbonsäuren und/oder reaktiven Hydroxy- oder Aminoalkylcarbonsäurederivaten erhältlich ist.

Bei dem polyalkoxylierten Polyalkylenimin handelt es sich um ein Polymer mit einem Polyalkylenimin-Rückgrat, das an den N-Atomen Polyalkoxygruppen trägt. Es weist vorzugsweise ein gewichtsmittleres Molekulargewicht M_{w} im Bereich von 500 g/mol bis 200 000 g/mol, insbesondere von 5 000 g/mol bis 100 000 g/mol auf. Das Polyalkylenimin weist an den Enden primäre Aminofunktionen und im Inneren vorzugsweise sowohl sekundäre als auch tertiäre Aminofunktionen auf; gegebenenfalls kann es im Inneren auch lediglich sekundäre Aminofunktionen aufweisen, so dass sich nicht ein verzweigtkettiges, sondern ein lineares Polyalkylenimin ergibt. Das Verhältnis von primären zu sekundären Aminogruppen im Polyalkylenimin liegt vorzugsweise im Bereich von 1:0,5 bis 1:1,5, insbesondere im Bereich von 1:0,7 bis 1:1. Das Verhältnis von primären zu tertiären Aminogruppen im Polyalkylenimin liegt vorzugsweise im Bereich von 1:0,2 bis 1:1, insbesondere im Bereich von 1:0,5 bis 1:0,8. Vorzugsweise weist das Polyalkylenimin ein gewichtsmittleres Molekulargewicht im Bereich von 400 g/mol bis 10000 g/mol, insbesondere von 600 g/mol bis 1800 g/mol auf. Die N-Atome im Polyalkylenimin sind vorzugsweise durch Alkylengruppen mit 2 bis 12 C-Atomen, insbesondere 2 bis 6 C-Atomen, voneinander getrennt, wobei nicht sämtliche Alkylengruppen die gleiche C-Atomanzahl aufweisen müssen. Besonders bevorzugt sind Ethylengruppen, 1,2-Propylengruppen, 1,3-Propylengruppen, 1,4-Butylengruppen und deren Mischungen, insbesondere Ethylengruppen. Die primären Aminofunktionen im Polyalkylenimin können 1 oder 2 Polyalkoxygruppen und die sekundären Aminofunktionen 1 Polyalkoxygruppe tragen, wobei nicht jede Aminofunktion alkoxygruppensubstituiert sein muss. Die durchschnittliche Anzahl von Alkoxygruppen pro primärer und sekundärer Aminofunktion im polyalkoxylierten Polyalkyenimin beträgt vorzugsweise 1 bis 100 und insbesondere 5 bis 15). Bei den Alkoxygruppen im polyalkoxylierten Polyalkylenimin handelt es sich vorzugsweise um Ethoxy-, Propoxy- oder Butoxygruppen oder Mischungen aus diesen, insbesondere um Ethoxygruppen. Polyalkoxylierte Polyalkylenimine sind beispielsweise durch Umsetzung von Polyalkyleniminen mit den Alkoxygruppen entsprechenden Alkylenoxiden, zum Beispiel Ethylenoxid, Propylenoxid, Butylenoxid oder deren Mischungen, zugänglich. Falls mehrere verschiedene Alkylenoxide zur Reaktion kommen sollen, können diese gleichzeitig oder eines nach dem anderen eingesetzt werden; bei der letztgenannten Variante ergeben sich Alkoxy-Blöcke in den Polyalkoxy-Substituenten. Gewünschtenfalls kann ein Teil, vorzugsweise nicht mehr als 30 % ihrer Anzahl, der N-Atome im polyalkoxylierten Polyalkylenimin durch bekannte Methoden zu N-Oxiden oxidiert oder mittels Einführung von Alkylgruppen quaterniert werden.

Durch die Umsetzung des polyalkoxylierten Polyalkylenimins mit der Hydroxy- oder Aminoalkylcarbonsäure oder deren reaktivem Derivat, zum Beispiel ihrem Ester mit einem kurzkettigen Alkohol wie Methanol oder Ethanol, ihrem Anhydrid oder ihrem Lactam oder Lacton, entstehen Esterbindungen zwischen dem Carbonylkohlenstoff der Hydroxy- oder Aminoalkylcarbonsäure und dem Sauerstoffatom der endständigen Hydroxygruppe des Polyalkoxy-Substituenten an den N-Atomen des polyalkoxylierten Polyalkylenimins. Gegebenenfalls kann weitere Hydroxy- oder Aminoalkylcarbonsäure oder deren reaktives Derivat mit der Hydroxy- oder Aminogruppe des so gebildeten Hydroxy- oder Aminocarbonsäureesters reagieren, so dass sich estergebundene Poly-Hydroxycarbonsäureester-Endgruppen oder Poly-Aminocarbonsäureamid-Endgruppen ergeben können. In diesen liegt die durchschnittliche Zahl der aus der Hydroxy- oder Aminoalkylcarbonsäure stammenden Wiederholungseinheiten vorzugsweise im Bereich von 1 bis 100, insbesondere von 5 bis 15. Bevorzugte Hydroxycarbonsäuren werden ausgewählt aus der Gruppe umfassend δ-Hydroxyvaleriansäure, ε-Hydroxycapronsäure und deren Mischungen. Bevorzugte Aminocarbonsäuren werden ausgewählt aus der Gruppe umfassend β-Aminopropansäure, γ-Aminobutansäure, δ-Aminovaleriansäure, ε-Aminocapronsäure und deren Mischungen. Gewünschtenfalls kann zumindest ein Teil der endständigen, aus der Hydroxycarbonsäure stammenden Hydroxylgruppen oder aus der Aminocarbonsäure stammenden Aminogruppe durch Umsetzung mit einer nicht hydroxy- oder aminosubstituierten Carbonsäure oder einem reaktiven Carbonsäurederivat, zum Beispiel ihrem Ester mit einem kurzkettigen Alkohol wie Methanol oder Ethanol, ihrem Anhydrid oder ihrem Halogenid, verestert oder amidiert werden. Vorzugsweise werden die Carbonsäuren ausgewählt aus der Gruppe umfassend Essigsäure, Hexansäure, Heptansäure, Benzoesäure, Octansäure, Methyloctansäure, Isononansäure, Decansäure, Undecansäure, Undecensäure, Dodecansäure, Myristinsäure, Stearinsäure, Ölsäure, Linolensäure, Palmitoleinsäure, Arachidonsäure, Tallöl-Säure und deren Mischungen. Derartige so erhältliche endständig veresterte oder amidierte Derivate sind nach der vorliegenden Erfindung zur Verstärkung der primären Wasch- und Reinigungskraft von Wasch- und Reinigungsmitteln beim Waschen von Textilien oder bei der Reinigung harter Oberflächen, insbesondere gegen ölige und/oder fettige Verschmutzungen, eingesetzt.

Vorzugsweise handelt es sich bei dem Polymer um eine Verbindung oder eine Mischung von mehreren Verbindungen der allgemeinen Formel (I), 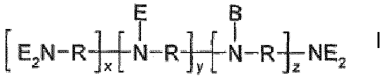 in der
R für einen linearen oder verzweigten Alkylenrest mit 2 bis 4 C-Atomen oder Mischungen aus diesen,
B für eine Verzweigungsstelle,
x für eine Zahl von 1 bis 200, y für eine Zahl von 1 bis 200 und z für eine Zahl von 0 bis 100 steht mit der Maßgabe, dass die Summe x+y+z so gewählt ist, dass das mittlere Molekulargewicht des Polyalkyleniminkerns (das heißt, der Verbindung mit E = H) im Bereich von 400 g/mol bis 10 000 g/mol liegt, und
E für H oder für eine Gruppe der allgemeinen Formel II oder Mischungen aus diesen steht, 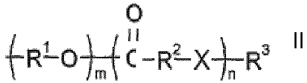 in der
   R¹ für einen linearen oder verzweigten Alkylenrest mit 2 bis 4 C-Atomen oder Mischungen aus diesen,
   m für eine Zahl von 3 bis 60, insbesondere von 20 bis 30,
   X für O oder NH,
   R² für Methylen, Ethylen oder einen linearen oder verzweigten Alkylen- oder ein- oder mehrfach ungesättigten Alkenylenrest mit 3 bis 11 C-Atomen oder Mischungen aus diesen,
   n für eine Zahl von 0 bis 100, insbesondere von 5 bis 15, und
   R³ für H, wenn n gleich 0 ist, und für H, die Methyl-, Ethyl- oder Ethenylgruppe, einen linearen, verzweigten oder cyclischen Alkyl- oder ein- oder mehrfach ungesättigten Alkenylrest mit 3 bis 21 C-Atomen, insbesondere 2 bis 10 C-Atomen, wenn n größer 0 ist,
   steht, mit den Maßgaben, dass - jeweils bezogen auf die Anzahl der Gruppen E in der Verbindung der Formel I - mindestens 1 %, vorzugsweise 40 % bis 100 % der Gruppen E nicht H sind und in mindestens 1 %, vorzugsweise 80 % bis 100 % der Gruppen E der Index n für eine Zahl größer 0 steht.

Die Verzweigungsstelle in Formel I kann vorzugsweise dadurch realisiert werden, dass B für eine ansonsten R entsprechende Gruppe R⁴ steht, wobei das eine Ende der Gruppe R⁴ an ein mit B gekennzeichnetes N-Atom aus einem Molekül der Formel I gebunden ist und das andere Ende der Gruppe R⁴ an ein mit B gekennzeichnetes N-Atom aus dem gleichen oder einem zweiten Molekül der Formel I gebunden ist.

Gewünschtenfalls kann ein Teil, vorzugsweise nicht mehr als 30 % bezogen auf ihre Anzahl, der in der Formel I dargestellten N-Atome einen weiteren Substituenten R⁵ tragen, so dass sich quaternierte Einheiten 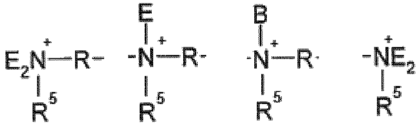 ergeben. R⁵ steht dabei für O⁻ oder eine lineare Alkylgruppe mit 1 bis 4 C-Atomen; Gegenanionen, zu denen beispielsweise Chlorid, Bromid, lodid, Sulfat und deren Mischungen zu rechnen sind, sind in einer Anzahl vorhanden, welche zum Ausgleich der positiven Ladungen der Stickstoffatome des Polymers führt. Die zusätzlichen Reste R⁵ können durch bekannte Oxidations- oder Quaternisierungsreaktionen eingeführt werden.

Die oben genannten Polyalkylenimin-polyalkoxylat-Derivate sind durch Umsetzung von polyalkoxyliertem Polyalkylenimin mit Hydroxy- oder Aminoalkylcarbonsäure oder deren reaktivem Derivat in einem "grafting from"-Ansatz und gegebenenfalls anschließende Umsetzung mit nicht hydroxy- oder aminosubstituierter Carbonsäure oder entsprechendem reaktiven Carbonsäurederivat unter Veresterungs- beziehungsweise Umesterungsbedingungen hergestellt.

Durch den Einsatz solcher Polymere beim Waschen von Textilien oder Reinigen harter Oberflächen wird die Primärwasch- und -reinigungskraft von Wasch- und Reinigungsmitteln insbesondere gegenüber öl- und/oder fetthaltigen Anschmutzungen verstärkt. Der Gegenstand der Erfindung ist daher die Verwendung der erfindungswesentlichen Polymere zur Verstärkung der Primärwasch- und -reinigungskraft von Wasch- und Reinigungsmitteln beim Waschen von Textilien oder Reinigen harter Oberflächen gegenüber Anschmutzungen, insbesondere gegenüber öl- und/oder fetthaltigen Anschmutzungen.

Die erfindungsgemäße Verwendung wird vorzugsweise verwirklicht durch Zugabe des Wirkstoffs zu einem von dem Wirkstoff freien Mittel oder zu einer Wasch- oder Reinigungsflotte, welches ein von dem Wirkstoff freies Mittel enthält, wobei die Zugabemenge an dem Wirkstoff, bezogen auf die Menge des von dem Wirkstoff freien Mittels, vorzugsweise im Bereich von 0,1 Gew.-% bis 10 Gew.-%, insbesondere von 1 Gew.-% bis 5 Gew.-% liegt. Mit besonderem Vorzug wird der erfindungswesentliche Wirkstoff gemeinsam mit insbesondere flüssigen Waschmitteln eingesetzt, die, bezogen auf das Gesamtgewicht des Mittels, eine Tensidkonzentration von mindestens 30 Gew.-% vorzugsweise im Bereich von 35 Gew.-% bis 70 Gew.-% und insbesondere 40 Gew.-% bis 50 Gew.-% aufweisen. Bevorzugt ist, dass man die Waschflotte durch Verdünnen eines flüssigen wasserhaltigen Waschmittels mit Wasser in Volumenverhältnissen im Bereich von 1:100 bis 1:10000, insbesondere 1:500 bis 1:2500 erzeugt. Die beiden letztgenannten Vorzüge gelten auch für Waschmittel, welche den erfindungswesentlichen Wirkstoff enthalten.

Im Rahmen der erfindungsgemäßen Verwendung ist bevorzugt, wenn die Konzentration an oben definiertem Wirkstoff in der wässrigen Waschflotte, wie sie beispielsweise in Waschmaschinen aber auch bei der Handwäsche zum Einsatz kommt, 0,001 g/l bis 0,29 g/l, insbesondere 0,0029 g/l bis 0,14 g/l beträgt. Bei der erfindungsgemäßen Verwendung arbeitet man vorzugsweise bei Temperaturen im Bereich von 10 °C bis 95 °C, insbesondere im Bereich von 20 °C bis 40 °C. Die erfindungsgemäße Verwendung wird vorzugsweise bei pH-Werten im Bereich von pH 1 bis pH 12, insbesondere von pH 7 bis pH 11 durchgeführt.

Im Zusammenhang mit der erfindungsgemäßen Verwendung neben dem genannten Wirkstoff einsetzbare Waschmittel, die als insbesondere pulverförmige Feststoffe, in nachverdichteter Teilchenform, als Lösungen oder Suspensionen und insbesondere als wasserhaltige flüssige Mittel vorliegen können, können alle bekannten und in derartigen Mitteln üblichen Inhaltsstoffe enthalten. Die Mittel können insbesondere Buildersubstanzen, oberflächenaktive Tenside, wassermischbare organische Lösungsmittel, Enzyme, Sequestrierungsmittel, Elektrolyte, pH-Regulatoren, Polymere mit Spezialeffekten, wie soil release-Polymere, Farbübertragungsinhibitoren, Vergrauungsinhibitoren, knitterreduzierende und formerhaltende polymere Wirkstoffe, und weitere Hilfsstoffe, wie optische Aufheller, Schaumregulatoren, Farb- und Duftstoffe enthalten.

Hierin, ist weiter ein wasserhaltiges flüssiges Waschmittel offenbart, das, bezogen auf das Gesamtgewicht des Mittels, mindestens 30 Gew.-%, vorzugsweise im Bereich von 35 Gew.-% bis 70 Gew.-% und insbesondere 40 Gew.-% bis 50 Gew.-%Tensid, 30 Gew.-% bis 70 Gew.-%, insbesondere 30 Gew.-% bis 65 Gew.-% Wasser und 0,1 Gew.-% bis 10 Gew.-%, insbesondere 1 Gew.-% bis 5 Gew.-% des wesentlichen Wirkstoffs enthält. Die Mittel können ein oder mehrere Tenside enthalten, wobei insbesondere anionische Tenside, nichtionische Tenside und deren Gemische in Frage kommen, aber auch kationische und/oder amphotere Tenside enthalten sein können.

Als nichtionische Tenside können alle dem Fachmann bekannten nichtionischen Tenside eingesetzt werden. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann oder lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 Mol EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt einer ganzen oder einer gebrochenen Zahl entsprechen können. Bevorzugte Alkoholethoxylate weisen eine eingeengte Homologenverteilung auf (narrow range ethoxylates, NRE).

Alternativ oder zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Außerdem können als weitere nichtionische Tenside auch Alkylglykoside der allgemeinen Formel R⁵O(G)ₓ eingesetzt werden, in der R⁵ einem primären geradkettigen oder methylverzweigten, insbesondere in 2-Stellung methylverzweigten aliphatischen Rest mit 8 bis 22, vorzugsweise 12 bis 18 C-Atomen entspricht und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethyl-aminoxid und N-Talgalkyl-N,N-dihydroxyethylaminoxid, und der Fettsäurealkanolamide können eingesetzt werden. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel 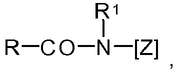 in der R für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgender Acylierung mit einer Fettsäure, einem Fettsäurealkylester oder einem Fettsäurechlorid erhalten werden können. Zur Gruppe der Polyhydroxyfettsäureamide gehören auch Verbindungen der Formel 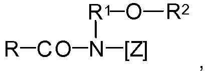 in der R für einen linearen oder verzweigten Alkyl- oder Alkenylrest mit 7 bis 12 Kohlenstoffatomen, R¹ für einen linearen, verzweigten oder zyklischen Alkylrest oder einen Arylrest mit 2 bis 8 Kohlenstoffatomen und R² für einen linearen, verzweigten oder zyklischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, das heißt Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von Glycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Weiterhin geeignet sind Alkylsulfate der allgemeinen Formel R-O-SO₃M, in der R für einen linearen, verzweigtkettigen oder cyclischen gesättigten Kohlenwasserstoffrest mit 12 bis 18, insbesondere 12 bis 14 C-Atomen und M für ein zur Ladungsneutralisation des Schwefelsäurehalbesters führendes Gegenkation steht, insbesondere ein Natrium- oder Kaliumion oder ein Ammoniumion der allgemeinen Formel R¹R²R³R⁴N⁺, in der R¹, R², R³, und R⁴ unabhängig voneinander für Wasserstoff, eine Alkylgruppe mit 1 bis 4 C-Atomen oder eine Hydroxyalkylgruppe mit 2 bis 3 C-Atomen steht. Bevorzugte Reste R leiten sich von nativen C₁₂-C₁₈-Fettalkoholen, wie beispielsweise von Kokosfettalkohol, Talgfettalkohol, Lauryl-, Myristyl-, Cetyl- oder Stearylalkohol, oder den C₁₀-C₂₀-Oxoalkoholen oder sekundären Alkoholen dieser Kettenlängen ab. Weiterhin bevorzugt sind Alkylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. C₁₂-C₁₆-Alkylsulfate und C₁₂-C₁₄-Alkylsulfate sind besonders bevorzugt.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen, darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen. Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

An Stelle der genannten Tenside oder in Verbindung mit ihnen können auch kationische und/oder amphotere Tenside eingesetzt werden.

Als kationische Aktivsubstanzen können beispielsweise kationische Verbindungen der nachfolgenden Formeln eingesetzt werden: 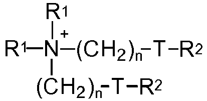 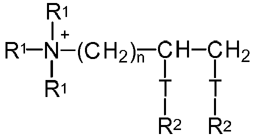 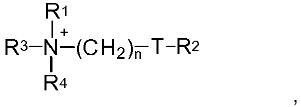 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist.

Derartige Tenside sind in Waschmitteln in Mengen von vorzugsweise 1 Gew.-% bis 80 Gew.-% enthalten. Wie oben ausgeführt sind besonders bevorzugte Waschmittel flüssig und weisen Tensidgehalte von mindestens 30 Gew.-%, vorzugsweise im Bereich von 32 Gew.-% bis 45 Gew.-% auf. Solche konzentrierten Flüssigwaschmittel sind vorteilhaft, weil sie mit geringerem Ressourceneinsatz einhergehen, was insbesondere durch ein geringeres Transportgewicht und eine verringerte Verbrauchsgröße bedingt wird, so braucht man im Vergleich zu niedriger konzentrierten Mitteln zum Beispiel eine geringere Flaschengröße und damit einen geringeren Verpackungsmaterialaufwand zum Erzielen der gleichen Anwendungsleistung. Außerdem werden solche hochkonzentrierten Mittel von den Verbrauchern bevorzugt, da sie geringe Lagerflächen in den Haushalten beanspruchen

Zur Pflege der Textilien und zur Verbesserung der Textileigenschaften wie einem weicheren "Griff" (Avivage) und verringerter elektrostatischer Aufladung (erhöhter Tragekomfort) können textilweichmachende Verbindungen eingesetzt werden. Die Wirkstoffe dieser Formulierungen sind quartäre Ammoniumverbindungen mit zwei hydrophoben Resten, wie beispielsweise das Disteraryldimethylammoniumchlorid, welches jedoch wegen seiner ungenügenden biologischen Abbaubarkeit zunehmend durch quartäre Ammoniumverbindungen ersetzt wird, die in ihren hydrophoben Resten Estergruppen als Sollbruchstellen für den biologischen Abbau enthalten.

Derartige "Esterquats" mit verbesserter biologischer Abbaubarkeit sind beispielsweise dadurch erhältlich, dass man Mischungen von Methyldiethanolamin und/oder Triethanolamin mit Fettsäuren verestert und die Reaktionsprodukte anschließend in an sich bekannter Weise mit Alkylierungsmitteln quaterniert. Als Appreturwirkstoff geeignet ist Dimethylolethylenharnstoff.

Ein Waschmittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, insbesondere durch Oxidation von Polysacchariden beziehungsweise Dextrinen zugänglichen Polycarboxylate, und/oder polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättigter Carbonsäuren liegt im allgemeinen zwischen 5 000 g/mol und 200 000 g/mol, die der Copolymeren zwischen 2 000 g/mol und 200 000 g/mol, vorzugsweise 50 000 g/mol bis 120 000 g/mol, jeweils bezogen auf freie Säure. Ein besonders bevorzugtes Acrylsäure-Maleinsäure-Copolymer weist eine relative Molekülmasse von 50 000 g/mol bis 100 000 g/mol auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere weisen im Allgemeinen eine relative Molekülmasse zwischen 1 000 g/mol und 200 000 g/mol auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30-bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen in der oberen Hälfte der genannten Bereiche werden vorzugsweise in pastenförmigen oder flüssigen, insbesondere wasserhaltigen Mitteln eingesetzt.

Als wasserlösliche anorganische Buildermaterialien kommen insbesondere polymere Alkaliphosphate, die in Form ihrer alkalischen neutralen oder sauren Natrium- oder Kaliumsalze vorliegen können, in Betracht. Beispiele hierfür sind Tetranatriumdiphosphat, Dinatriumdihydrogendiphosphat, Pentanatriumtriphosphat, sogenanntes Natriumhexametaphosphat sowie die entsprechenden Kaliumsalze beziehungsweise Gemische aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen liegt in der Regel im Bereich von 100 mg bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können eingesetzt werden. In einer weiteren bevorzugten Ausführungsform wird ein kristallines Natriumschichtsilikat mit einem Modul von 2 bis 3 eingesetzt, wie es n aus Sand und Soda hergestellt werden kann. Kristalline Natriumsilikate mit einem Modul im Bereich von 1,9 bis 3,5 werden in einer weiteren bevorzugten Ausführungsform eingesetzt. In einer bevorzugten Ausgestaltung setzt man ein granulares Compound aus Alkalisilikat und Alkalicarbonat ein, wie es zum Beispiel unter dem Namen Nabion^{®} 15 im Handel erhältlich ist. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind in Waschmitteln vorzugsweise in Mengen bis zu 60 Gew.-%, insbesondere von 5 Gew.-% bis 40 Gew.-%, enthalten.

In einer bevorzugten Ausgestaltung weist das Mittel einen wasserlöslichen Builderblock auf. Durch die Verwendung des Begriffes "Builderblock" soll hierbei ausgedrückt werden, dass die Mittel keine weiteren Buildersubstanzen enthalten als solche, die wasserlöslich sind, das heißt sämtliche in dem Mittel enthaltenen Buildersubstanzen sind in dem so charakterisierten "Block" zusammengefasst, wobei allenfalls die Mengen an Stoffen ausgenommen sind, die als Verunreinigungen beziehungsweise stabilisierende Zusätze in geringen Mengen in den übrigen Inhaltsstoffen der Mittel handelsüblicher Weise enthalten sein können. Unter dem Begriff "wasserlöslich" soll dabei verstanden werden, dass sich der Builderblock bei der Konzentration, die sich durch die Einsatzmenge des ihn enthaltenden Mittels bei den üblichen Bedingungen ergibt, rückstandsfrei löst. Vorzugsweise sind mindestens 15 Gew.-% und bis zu 55 Gew.-%, insbesondere 25 Gew.-% bis 50 Gew.-% an wasserlöslichem Builderblock in den Mitteln enthalten. Dieser setzt sich vorzugsweise zusammen aus den Builderkomponenten
a) 5 Gew.-% bis 35 Gew.-% Citronensäure, Alkalicitrat und/oder Alkalicarbonat, welches auch zumindest anteilig durch Alkalihydrogencarbonat ersetzt sein kann,
b) bis zu 10 Gew.-% Alkalisilikat mit einem Modul im Bereich von 1,8 bis 2,5,
c) bis zu 2 Gew.-% Phosphonsäure und/oder Alkaliphosphonat,
d) bis zu 50 Gew.-% Alkaliphosphat, und
e) bis zu 10 Gew.-% polymerem Polycarboxylat,
wobei die Mengenangaben sich auf das gesamte Waschmittel beziehen. Dies gilt auch für alle folgenden Mengenangaben, sofern nicht ausdrücklich anders angegeben.

In einer bevorzugten Ausführungsform enthält der wasserlösliche Builderblock mindestens 2 der Builderkomponenten b), c), d) und e) in Mengen größer 0 Gew.-%.

Hinsichtlich der Builderkomponente a) sind in einer bevorzugten Ausführungsform 15 Gew.-% bis 25 Gew.-% Alkalicarbonat, welches zumindest anteilig durch Alkalihydrogencarbonat ersetzt sein kann, und bis zu 5 Gew.-%, insbesondere 0,5 Gew.-% bis 2,5 Gew.-% Citronensäure und/oder Alkalicitrat enthalten. In einer alternativen Ausführungsform sind als Builderkomponente a) 5 Gew.-% bis 25 Gew.-%, insbesondere 5 Gew.-% bis 15 Gew.-% Citronensäure und/oder Alkalicitrat und bis zu 5 Gew.-% , insbesondere 1 Gew.-% bis 5 Gew.-% Alkalicarbonat, welches zumindest anteilig durch Alkalihydrogencarbonat ersetzt sein kann, enthalten. Falls sowohl Alkalicarbonat wie auch Alkalihydrogencarbonat vorhanden sind, weist die Builderkomponente a) Alkalicarbonat und Alkalihydrogencarbonat vorzugsweise im Gewichtsverhältnis von 10:1 bis 1:1 auf.

Hinsichtlich der Builderkomponente b) sind in einer bevorzugten Ausführungsform 1 Gew.-% bis 5 Gew.-% Alkalisilikat mit einem Modul im Bereich von 1,8 bis 2,5 enthalten.

Hinsichtlich der Builderkomponente c) sind in einer bevorzugten Ausführungsform 0,05 Gew.-% bis 1 Gew.-% Phosphonsäure und/oder Alkaliphosphonat enthalten. Unter Phosphonsäuren werden dabei auch gegebenenfalls substituierte Alkylphosphonsäuren verstanden, die auch mehrere Phosphonsäuregruppierungen aufweisen könne (sogenannte Polyphosphonsäuren). Bevorzugt werden sie ausgewählt aus den Hydroxy- und/oder Aminoalkylphosphonsäuren und/oder deren Alkalisalzen, wie zum Beispiel Dimethylaminomethandiphosphonsäure, 3-Aminopropan-1-hydroxy-1,1-diphosphonsäure, 1-Amino-1-phenyl-methandiphosphonsäure, 1-Hydroxyethan-1,1-diphosphonsäure, Amino-tris(methylenphosphonsäure), N,N,N',N'-Ethylendiamin-tetrakis(methylenphosphonsäure) und acylierte Derivate der phosphorigen Säure, die auch in beliebigen Mischungen eingesetzt werden können.

Hinsichtlich der Builderkomponente d) sind in einer bevorzugten Ausführungsform 15 Gew.-% bis 35 Gew.-% Alkaliphosphat, insbesondere Trinatriumpolyphosphat, enthalten. Alkaliphosphat ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei. Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, Na₂H₂P₂O₇), bei höherer Temperatur in Natiumtrimetaphosphat (Na₃P₃O₉) und Madrellsches Salz übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° (Zersetzung unter Bildung von (KPO₃)ₓ, Kaliumpolyphosphat) und ist leicht löslich in Wasser. Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol (Dichte 2,066 gcm⁻³, Wasserverlust bei 95°), 7 Mol (Dichte 1,68 gcm⁻³, Schmelzpunkt 48° unter Verlust von 5 H₂O) und 12 Mol Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres oder zweibasiges Kaliumphosphat), K₂HPO₄, ist ein amorphes, weißes Salz, das in Wasser leicht löslich ist. Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden die leichter löslichen, daher hochwirksamen, Kaliumphosphate gegenüber entsprechenden Natrium-Verbindungen vielfach bevorzugt. Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Bei Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³ dar, das in Wasser löslich ist, wobei der pH-Wert der 1%igen Lösung bei 25° 10,4 beträgt. Durch Kondensation des NaH₂PO₄ bzw. des KH₂PO₄ entstehen höhermolekulare Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Madrellsches Salz. Alle höheren Natrium- und Kaliumphosphate werden gemeinsam als kondensierte Phosphate bezeichnet. Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lösung. durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind einsetzbar.

Hinsichtlich der Builderkomponente e) sind in einer bevorzugten Ausführungsform der Mittel 1,5 Gew.-% bis 5 Gew.-% polymeres Polycarboxylat, insbesondere ausgewählt aus den Polymerisations- beziehungsweise Copolymerisationsprodukten von Acrylsäure, Methacrylsäure und/oder Maleinsäure enthalten. Unter diesen sind die Homopolymere der Acrylsäure und unter diesen wiederum solche mit einer mittleren Molmasse im Bereich von 5 000 D bis 15 000 D (PA-Standard) besonders bevorzugt.

Als in den Mitteln verwendbare Enzyme kommen solche aus der Klasse der Lipasen, Cutinasen, Amylasen, Pullulanasen, Mannanasen, Cellulasen, Hemicellulasen, Xylanasen und Peroxidasen sowie deren Gemische in Frage, beispielsweise Amylasen wie Termamyl^{®}, Amylase-LTO, Maxamyl^{®}, Duramyl^{®} und/oder Purafect^{®} OxAm, Lipasen wie Lipolase^{®}, Lipomax^{®}, Lumafast^{®}, Lipozym^{®} und/oder Lipex^{®}, Cellulasen wie Celluzyme^{®} und/oder Carezyme^{®}. Besonders geeignet sind aus Pilzen oder Bakterien, wie Bacillus subtilis, Bacillus licheniformis, Streptomyces griseus, Humicola lanuginosa, Humicola insolens, Pseudomonas pseudoalcaligenes oder Pseudomonas cepacia gewonnene enzymatische Wirkstoffe. Die gegebenenfalls verwendeten Enzyme können an Trägerstoffen adsorbiert und/oder in Hüllsubstanzen eingebettet sein, um sie gegen vorzeitige Inaktivierung zu schützen. Sie sind in Waschmitteln vorzugsweise in Mengen bis zu 10 Gew.-%, insbesondere von 0,2 Gew.-% bis 2 Gew.-%, enthalten.

In einer bevorzugten Ausführungsform enthält das Mittel 5 Gew.-% bis 50 Gew.-%, insbesondere 8 bis 30 Gew.-% anionisches und/oder nichtionisches Tensid, bis zu 60 Gew.-%, insbesondere 5 bis 40 Gew.-% Buildersubstanz und 0,2 Gew.-% bis 2 Gew.-% Enzym, ausgewählt aus den Lipasen, Cutinasen, Amylasen, Pullulanasen, Mannanasen, Cellulasen, Oxidasen und Peroxidasen sowie deren Gemischen.

Zu den in den Waschmitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den Mitteln vorzugsweise in Mengen nicht über 30 Gew.-%, insbesondere von 6 Gew.-% bis 20 Gew.-%, vorhanden.

Aus der Natur stammende Polymere, die in wässrigen flüssigen Mitteln als Verdickungsmittel Verwendung finden können, sind beispielsweise Agar-Agar, Carrageen, Tragant, Gummi arabicum, Alginate, Pektine, Polyosen, Guar-Mehl, Johannisbrotbaumkernmehl, Stärke, Dextrine, Gelatine und Casein, Cellulosederivate wie Carboxymethylcellulose, Hydroxyethyl- und -propylcellulose, und polymere Polysaccharid-Verdickungsmittel wie Xanthan; daneben kommen auch vollsynthetische Polymere wie Polyacryl- und Polymethacryl-Verbindungen, Vinylpolymere, Polycarbonsäuren, Polyether, Polyimine, Polyamide und Polyurethane als Verdicker in Frage.

Zur Einstellung eines gewünschten, sich durch die Mischung der übrigen Komponenten nicht von selbst ergebenden pH-Werts können die Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den Mitteln vorzugsweise nicht über 20 Gew.-%, insbesondere von 1,2 Gew.-% bis 17 Gew.-%, enthalten.

Zu den für den Einsatz in Mitteln für die Wäsche von Textilien in Frage kommenden Farbübertragungsinhibitoren gehören insbesondere Polyvinylpyrrolidone, Polyvinylimidazole, polymere N-Oxide wie Poly-(vinylpyridin-N-oxid) und Copolymere von Vinylpyrrolidon mit Vinylimidazol und gegebenenfalls weiteren Monomeren.

Die Mittel können Knitterschutzmittel enthalten, da textile Flächengebilde, insbesondere aus Reyon, Wolle, Baumwolle und deren Mischungen, zum Knittern neigen können, weil die Einzelfasern gegen Durchbiegen, Knicken, Pressen und Quetschen quer zur Faserrichtung empfindlich sind. Hierzu zählen beispielsweise synthetische Produkte auf der Basis von Fettsäuren, Fettsäureestern, Fettsäureamiden, -alkylolestern, -alkylolamiden oder Fettalkoholen, die meist mit Ethylenoxid umgesetzt sind, oder Produkte auf der Basis von Lecithin oder modifizierter Phosphorsäureester.

Vergrauungsinhibitoren haben die Aufgabe, den von der harten Oberfläche und insbesondere von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Die Mittel können optische Aufheller, unter diesen insbesondere Derivate der Diaminostilbendisulfonsäure beziehungsweise deren Alkalimetallsalze, enthalten. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

Als in den Mitteln, insbesondere den Mitteln in fester Form, gegebenenfalls enthaltene Persauerstoffverbindungen kommen insbesondere organische Persäuren oder persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, wie Perborat, Percarbonat und/oder Persilikat, in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Besonders bevorzugt wird Alkalipercarbonat, Alkaliperborat-Monohydrat, Alkaliperborat-Tetrahydrat oder, insbesondere in flüssigen Mitteln, Wasserstoffperoxid in Form wässriger Lösungen, die 3 Gew.-% bis 10 Gew.-% Wasserstoffperoxid enthalten, eingesetzt. Vorzugsweise sind Persauerstoffverbindungen in Mengen von bis zu 50 Gew.-%, insbesondere von 5 Gew.-% bis 30 Gew.-%, in Waschmitteln vorhanden.

Zusätzlich können übliche Bleichaktivatoren, die unter Perhydrolysebedingungen Peroxocarbonsäuren oder Peroxoimidsäuren bilden, und/oder übliche die Bleiche aktivierende Übergangsmetallkomplexe eingesetzt werden. Die fakultativ, insbesondere in Mengen von 0,5 Gew.-% bis 6 Gew.-%, vorhandene Komponente der Bleichaktivatoren umfasst die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natrium-isononanoyl-phenolsulfonat, und acylierte Zuckerderivate, insbesondere Pentaacetylglukose, sowie kationische Nitrilderivate wie Trimethylammoniumacetonitril-Salze. Die Bleichaktivatoren können zur Vermeidung der Wechselwirkung mit den Persauerstoffverbindungen bei der Lagerung in bekannter Weise mit Hüllsubstanzen überzogen beziehungsweise granuliert worden sein, wobei mit Hilfe von Carboxymethylcellulose granuliertes Tetraacetylethylendiamin mit mittleren Korngrößen von 0,01 mm bis 0,8 mm, granuliertes 1 ,5-Diacetyl-2,4-dioxohexahydro-1 ,3,5-triazin, und/oder in Teilchenform konfektioniertes Trialkylammoniumacetonitril besonders bevorzugt ist. In Waschmitteln sind derartige Bleichaktivatoren vorzugsweise in Mengen bis zu 8 Gew.-%, insbesondere von 2 Gew.-% bis 6 Gew.-%, jeweils bezogen auf gesamtes Mittel, enthalten.

Die Herstellung fester Mittel bietet keine Schwierigkeiten und kann in im Prinzip bekannter Weise, zum Beispiel durch Sprühtrocknen oder Granulation, erfolgen. Zur Herstellung der Mittel mit erhöhtem Schüttgewicht, insbesondere im Bereich von 650 g/l bis 950 g/l, ist ein einen Extrusionsschritt aufweisendes Verfahren bevorzugt. Waschmittel in Form wässriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt.

In einer auch bevorzugten Ausführungsform liegen die Mittel, insbesondere in konzentrierter flüssiger Form, als Portion in einer ganz oder teilweise wasserlöslichen Umhüllung vor. Die Portionierung erleichtert dem Verbraucher die Dosierbarkeit.

Die Mittel können dabei beispielsweise in Folienbeutel eingepackt vorliegen. Beutelverpackungen aus wasserlöslicher Folie machen ein Aufreißen der Verpackung durch den Verbraucher unnötig. Auf diese Weise ist ein bequemes Dosieren einer einzelnen, für einen Waschgang bemessenen Portion durch Einlegen des Beutels direkt in die Waschmaschine oder durch Einwerfen des Beutels in eine bestimmte Menge Wasser, beispielsweise in einem Eimer, einer Schüssel oder im Handwaschbecken, möglich. Der die Waschportion umgebende Folienbeutel löst sich bei Erreichen einer bestimmten Temperatur rückstandsfrei auf.

Im Stand der Technik existieren zahlreiche Verfahren zur Herstellung wasserlöslicher Waschmittelportionen, die grundsätzlich auch zur Herstellung von im Rahmen der vorliegenden Erfindung brauchbaren Mitteln geeignet sind. Bekannteste Verfahren sind dabei die Schlauchfolienverfahren mit horizontalen und vertikalen Siegelnähten. Weiterhin geeignet zur Herstellung von Folienbeuteln oder auch formstabilen Waschmittelportionen ist das Thermoformverrfahren (Tiefziehverfahren). Die wasserlöslichen Umhüllungen müssen allerdings nicht zwangsläufig aus einem Folienmaterial bestehen, sondern können auch formstabile Behältnisse darstellen, die beispielsweise mittels eines Spritzgussverfahrens erhalten werden können.

Weiterhin sind Verfahren zur Herstellung wasserlöslicher Kapseln aus Polyvinylalkohol oder Gelatine bekannt, die prinzipiell die Möglichkeit bieten, Kapseln mit einem hohen Befüllgrad bereitzustellen. Die Verfahren beruhen darauf, dass in eine formgebende Kavität das wasserlösliche Polymer eingeführt wird. Das Befüllen und Versiegeln der Kapseln erfolgt entweder synchron oder in nacheinander folgenden Schritten, wobei im letzteren Fall die Befüllung der Kapseln durch eine kleine Öffnung erfolgt. Die Befüllung der Kapseln erfolgt dabei beispielsweise durch einen Befüllkeil, der oberhalb von zwei sich gegeneinander drehenden Trommeln, die auf ihrer Oberfläche Kugelhalbschalen aufweisen, angeordnet ist. Die Trommeln führen Polymerbänder, die die Kugelhalbschalenkavitäten bedecken. An den Positionen, an denen das Polymerband der einen Trommel mit dem Polymerband der gegenüberliegenden Trommel zusammentrifft, findet eine Versiegelung statt. Parallel dazu wird das Befüllgut in die sich ausbildende Kapsel injiziert, wobei der Injektionsdruck der Befüllflüssigkeit die Polymerbänder in die Kugelhalbschalenkavitäten presst. Ein Verfahren zur Herstellung wasserlöslicher Kapseln, bei dem zunächst die Befüllung und anschließend die Versiegelung erfolgt, basiert auf dem sogenannten Bottle-Pack^{®}-Verfahren. Hierbei wird ein schlauchartiger Vorformling in eine zweiteilige Kavität geführt. Die Kavität wird geschlossen, wobei der untere Schlauchabschnitt versiegelt wird, anschließend wird der Schlauch aufgeblasen zur Ausbildung der Kapselform in der Kavität, befüllt und abschließend versiegelt.

Das für die Herstellung der wasserlöslichen Portion verwendete Hüllmaterial ist vorzugsweise ein wasserlöslicher polymerer Thermoplast, besonders bevorzugt ausgewählt aus der Gruppe (gegebenenfalls teilweise acetalisierter) Polyvinylalkohol, Polyvinylalkohol-Copolymere, Polyvinylpyrrolidon, Polyethylenoxid, Gelatine, Cellulose und deren Derivate, Stärke und deren Derivate, Blends und Verbünde, anorganische Salze und Mischungen der genannten Materialien, vorzugsweise Hydroxypropylmethylcellulose und/oder Polyvinylalkohol-Blends. Polyvinylalkohole sind kommerziell verfügbar, beispielsweise unter dem Warenzeichen Mowiol^{®} (Clariant). Im Rahmen der vorliegenden Erfindung besonders geeignete Polyvinylalkohole sind beispielsweise Mowiol^{®} 3-83, Mowiol^{®} 4-88, Mowiol^{®} 5-88, Mowiol^{®} 8-88 sowie Clariant L648. Das zur Herstellung der Portion verwendete wasserlösliche Thermoplast kann zusätzlich gegebenenfalls Polymere ausgewählt aus der Gruppe, umfassend Acrylsäure-haltige Polymere, Polyacrylamide, Oxazolin-Polymere, Polystyrolsulfonate, Polyurethane, Polyester, Polyether und/oder Mischungen der vorstehenden Polymere, aufweisen. Bevorzugt ist, wenn das verwendete wasserlösliche Thermoplast einen Polyvinylalkohol umfasst, dessen Hydrolysegrad 70 Mol-% bis 100 Mol-%, vorzugsweise 80 Mol-% bis 90 Mol-%, besonders bevorzugt 81 Mol-% bis 89 Mol-% und insbesondere 82 Mol-% bis 88 Mol-% ausmacht. Weiter bevorzugt ist, dass das verwendete wasserlösliche Thermoplast einen Polyvinylalkohol umfasst, dessen Molekulargewicht im Bereich von 10 000 g/mol bis 100 000 g/mol, vorzugsweise von 11 000 g/mol bis 90 000 g/mol, besonders bevorzugt von 12 000 g/mol bis 80 000 g/mol und insbesondere von 13 000 g/mol bis 70 000 g/mol liegt. Weiterhin bevorzugt ist, wenn die Thermoplaste in Mengen von mindestens 50 Gew.-%, vorzugsweise von mindestens 70 Gew.-%, besonders bevorzugt von mindestens 80 Gew.-% und insbesondere von mindestens 90 Gew.-%, jeweils bezogen auf das Gewicht des wasserlöslichen polymeren Thermoplasts, vorliegt.

### Beispiele

### Beispiel 1: Herstellung eines polyethoxylierten Polyethylenimins mit poly-ε-Hydroxycapronsäureester-Endgruppe

81 g (0.008 mol) des beispielsweise gemäß Beispiel 3 der internationalen Patentanmeldung WO 2006/108857 aus Polyethylenimin (Mw = 600 g/mol) und Ethylenoxid erhältlichen polyethoxlierten Polyethylenimids (PEI₆₀₀EO₂₀) ,63.9 g (0.54 mol) ε-Caprolacton und Dibutylzinndilaurat (0.5 Gew.-% bezogen auf das Gewicht der Summe der Reaktanden) wurden unter Stickstoffatmosphäre bei 125 °C für 6 h gerührt, auf Raumtemperatur abgekühlt und so 91,5 g des Polymers PEI₆₀₀EO₂₀εCL₅ erhalten. Das Polymer wies durchschnittlich 20 Einheiten Ethylenoxid pro N-Atom des Kerns auf und 5 Einheiten ε-Caprolacton, welche zusätzlich auf jede Hydroxylgruppe des Ethylenoxidblocks gegraftet wurden.

### Beispiel 2: Quaternisierung

0.24 g (2 mmol) Dimethylsulfat wurden zu 20 g (1 mmol) PEI₆₀₀EO₂₀εCL₅C₁₂ zugegeben und die Reaktionsmischung bei 60°C unter Stickstoffatmosphäre gerührt. Es wurde für weitere 3 h gerührt und nach Abkühlen auf Raumtemperatur wurde das Polymer mit 22% Quaternisierung erhalten.

## Patentansprüche

1. Verwendung von Polymeren, erhältlich durch Umsetzung von alkoxylierten Polyalkyleniminen mit Hydroxy- oder Aminoalkylcarbonsäuren und/oder reaktiven Hydroxy- oder Aminoalkylcarbonsäurederivaten, und gegebenenfalls anschließende Veresterung oder Amidierung zumindest eines Teil der endständigen, aus der Hydroxycarbonsäure stammenden Hydroxylgruppen oder aus der Aminocarbonsäure stammenden Aminogruppen durch Umsetzung mit nicht hydroxy- oder aminosubstituierter Carbonsäure oder deren reaktivem Carbonsäurederivat, zur Verstärkung der Primärwasch- und -reinigungskraft von Wasch- und Reinigungsmitteln beim Waschen von Textilien oder Reinigen harter Oberflächen insbesondere gegenüber öl- und/oder fetthaltigen Anschmutzungen.

2. Verwendung nach Anspruch 1, **dadurch gekennzeichnet, dass** man das Polymer zu einem von dem Polymer freien Mittel oder zu einer Wasch- oder Reinigungsflotte zugibt, welches ein von dem Polymer freies Mittel enthält, wobei die Zugabemenge an dem Polymer, bezogen auf die Menge des von dem Polymer freien Mittels, im Bereich von 0,1 Gew.-% bis 10 Gew.-%, insbesondere von 1 Gew.-% bis 5 Gew.-% liegt

3. Verwendung nach einem der voranstehenden Ansprüche, **dadurch gekennzeichnet, dass** der durchschnittliche Alkoxylierungsgrad der N-Atome im alkoxylierten Polyalkylenimin im Bereich von 1 bis 100, insbesondere von 5 bis 15 liegt.

4. Verwendung nach einem der voranstehenden Ansprüche, **dadurch gekennzeichnet, dass** die Hydroxyalkylcarbonsäure ausgewählt wird aus der Gruppe umfassend 6-Hydroxyvaleriansäure, ε-Hydroxycapronsäure und deren Mischungen, dass das reaktive Hydroxyalkylcarbonsäurederivat ausgewählt wird aus den Lactonen der genannten Hydroxyalkylcarbonsäuren und deren Mischungen, dass die Aminoalkylcarbonsäure ausgewählt wird aus der Gruppe umfassend β-Aminopropansäure, γ-Aminobutansäure, δ-Aminovaleriansäure, ε-Aminocapronsäure und deren Mischungen, und/oder dass das reaktive Aminoalkylcarbonsäurederivat ausgewählt wird aus den Lactamen der genannten Aminoalkylcarbonsäuren und deren Mischungen.

5. Verwendung nach einem der voranstehenden Ansprüche, **dadurch gekennzeichnet, dass** es sich bei dem Polymer um eine Verbindung oder eine Mischung von mehreren Verbindungen der allgemeinen Formel (I) handelt, 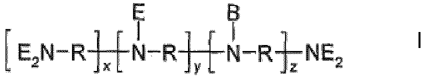 in der
R für einen linearen oder verzweigten Alkylenrest mit 2 bis 4 C-Atomen oder Mischungen aus diesen,
B für eine Verzweigungsstelle,
x für eine Zahl von 1 bis 200, y für eine Zahl von 1 bis 200 und z für eine Zahl von 0 bis 100 steht mit der Maßgabe, dass die Summe x+y+z so gewählt ist, dass das mittlere Molekulargewicht des Polyalkyleniminkerns im Bereich von 400 g/mol bis 10 000 g/mol liegt, und
E für H oder für eine Gruppe der allgemeinen Formel II oder Mischungen aus diesen steht, 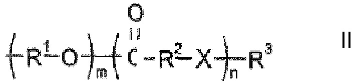 in der
R¹ für einen linearen oder verzweigten Alkylenrest mit 2 bis 4 C-Atomen oder Mischungen aus diesen,
m für eine Zahl von 3 bis 60, insbesondere von 20 bis 30,
X für O oder NH,
R² für Methylen, Ethylen oder einen linearen oder verzweigten Alkylen- oder ein- oder mehrfach ungesättigten Alkenylenrest mit 3 bis 11 C-Atomen oder Mischungen aus diesen,
n für eine Zahl von 0 bis 100, insbesondere von 5 bis 15, und
R³ für H, wenn n gleich 0 ist, und für H, die Methyl-, Ethyl- oder Ethenylgruppe, einen linearen, verzweigten oder cyclischen Alkyl- oder ein- oder mehrfach ungesättigten Alkenylrest mit 3 bis 21 C-Atomen, insbesondere 2 bis 10 C-Atomen, wenn n größer 0 ist,
steht, mit den Maßgaben, dass -jeweils bezogen auf die Anzahl der Gruppen E in der Verbindung der Formel I - mindestens 1 %, insbesondere 40 % bis 100 % der Gruppen E nicht H sind und in mindestens 1 %, insbesondere 80 % bis 100 % der Gruppen E n für eine Zahl grö-ßer 0 steht.

6. Verwendung nach Anspruch 5, **dadurch gekennzeichnet, dass** ein Teil, insbesondere nicht mehr als 30 % bezogen auf ihre Anzahl, der in der Formel I dargestellten N-Atome einen weiteren Substituenten R⁵ tragen, so dass sich quaternierte Einheiten 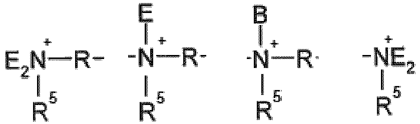 ergeben, in denen R⁵ für O⁻ oder eine lineare Alkylgruppe mit 1 bis 4 C-Atomen steht und Gegenanionen in einer Anzahl vorhanden sind, welche zum Ausgleich der positiven Ladungen der Stickstoffatome des Polymers führt.

## Claims

1. Use of polymers obtainable by reaction of alkoxylated polyalkyleneimines with hydroxy- or aminoalkylcarboxylic acids and/or reactive hydroxy- or aminoalkylcarboxylic acid derivatives, and optionally subsequent esterification or amidation of at least some of the terminal hydroxyl groups or amino groups originating from the hydroxycarboxylic acid, hydroxyl groups originating from the hydroxycarboxylic acid or amino groups originating from the aminocarboxylic acid by reaction with non-hydroxy- or amino-substituted carboxylic acid or its reactive carboxylic acid derivative, in order to increase the primary washing and cleaning power of detergents and cleaning agents when washing textiles or cleaning hard surfaces, in particular with respect to oil- and/or grease-containing soiling.

2. Use according to claim 1, **characterized in that** the polymer is added to an agent free of the polymer or to a washing or cleaning liquor which contains an agent free of the polymer, the amount of polymer added, based on the amount of agent free of the polymer, being in the range from 0.1% by weight to 10% by weight, in particular from 1% by weight to 5% by weight

3. Use according to one of the preceding claims, **characterized in that** the average degree of alkoxylation of the N atoms in the alkoxylated polyalkyleneimine is in the range from 1 to 100, in particular from 5 to 15.

4. Use according to one of the preceding claims, **characterized in that** the hydroxyalkylcarboxylic acid is selected from the group comprising δ-hydroxyvaleric acid, ε-hydroxycaproic acid and mixtures thereof, **in that** the reactive hydroxyalkylcarboxylic acid derivative is selected from the lactones of said hydroxyalkylcarboxylic acids and mixtures thereof, that the aminoalkylcarboxylic acid is selected from the group comprising β-aminopropanoic acid, γ-aminobutanoic acid, δ-aminovaleric acid, ε-aminocaproic acid and mixtures thereof, and/or that the reactive aminoalkylcarboxylic acid derivative is selected from the lactams of said aminoalkylcarboxylic acids and mixtures thereof.

5. Use according to one of the preceding claims, **characterized in that** the polymer is a compound or a mixture of several compounds of the general formula (I), 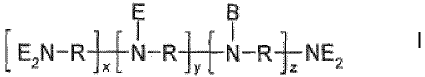 in the
R is a linear or branched alkylene radical with 2 to 4 carbon atoms or mixtures of these,
B for a branching point,
x is a number from 1 to 200, y is a number from 1 to 200 and z is a number from 0 to 100, with the proviso that the sum x+y+z is chosen such that the average molecular weight of the polyalkyleneimine nucleus is in the range from 400 g/mol to 10 000 g/mol, and
E stands for H or for a group of the general formula II or mixtures thereof, 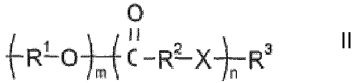 in the
R¹ is a linear or branched alkylene radical with 2 to 4 carbon atoms or mixtures of these,
m for a number from 3 to 60, in particular from 20 to 30,
X for O or NH,
R² represents methylene, ethylene or a linear or branched alkylene or mono- or polyunsaturated alkenylene radical with 3 to 11 carbon atoms or mixtures of these,
n is a number from 0 to 100, in particular from 5 to 15, and
R³ represents H when n is 0, and represents H, the methyl, ethyl or ethenyl group, a linear, branched or cyclic alkyl or mono- or polyunsaturated alkenyl radical having 3 to 21 carbon atoms, in particular 2 to 10 carbon atoms, when n is greater than 0,
with the provisos that - in each case based on the number of groups E in the compound of the formula I - at least 1 %, in particular 40 % to 100 %, of the groups E are not H and in at least 1 %, in particular 80 % to 100 %, of the groups E n is a number greater than 0.

6. Use according to claim 5, **characterized in that** some, in particular not more than 30%, based on their number, of the N atoms shown in formula I carry a further substituent R⁵ so that quaternized units are formed. 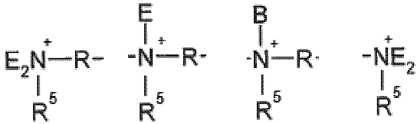 in which R⁵ stands for O⁻ or a linear alkyl group with 1 to 4 carbon atoms and counter anions are present in a number which leads to the balancing of the positive charges of the nitrogen atoms of the polymer.

## Revendications

1. Utilisation de polymères pouvant être obtenus par réaction de polyalkylèneimines alcoxylées avec des acides hydroxy- ou amino-alkylcarboxyliques et/ou des dérivés réactifs d'acides hydroxy- ou amino-alkylcarboxyliques, suivie éventuellement d'une estérification ou d'une amidation d'au moins une partie des groupes terminaux, groupes hydroxyle provenant de l'acide hydroxycarboxylique ou des groupes amino provenant de l'acide aminocarboxylique par réaction avec un acide carboxylique non substitué par un groupe hydroxy ou amino ou son dérivé réactif d'acide carboxylique, pour renforcer le pouvoir de lavage et de nettoyage primaire de produits de lavage et de nettoyage lors du lavage de textiles ou du nettoyage de surfaces dures, en particulier vis-à-vis de salissures contenant de l'huile et/ou de la graisse.

2. Utilisation selon la revendication 1, **caractérisée en ce que** l'on ajoute le polymère à un agent exempt du polymère ou à un bain de lavage ou de nettoyage qui contient un agent exempt du polymère, la quantité ajoutée du polymère, par rapport à la quantité de l'agent exempt du polymère, se situant dans la plage de 0,1 % en poids à 10 % en poids, en particulier de 1 % en poids à 5 % en poids

3. Utilisation selon l'une des revendications précédentes, **caractérisée en ce que** le degré moyen d'alcoxylation des atomes de N dans la polyalkylèneimine alcoxylée se situe dans la plage de 1 à 100, en particulier de 5 à 15.

4. Utilisation selon l'une des revendications précédentes, **caractérisée en ce que** l'acide hydroxyalkylcarboxylique est choisi dans le groupe comprenant l'acide δ-hydroxyvalérique re, l'acide ε-hydroxycaproïque et leurs mélanges, **en ce que** le dérivé réactif d'acide hydroxyalkylcarboxylique re est choisi parmi les lactones desdits acides hydroxyalkylcarboxyliques et leurs mélanges, **en ce que** l'acide aminoalkylcarboxylique est choisi dans le groupe comprenant l'acide β-aminopropanoïque, l'acide γ-aminobutanoïque, l'acide δ-aminovalérique, l'acide ε-aminocaproïque et leurs mélanges, et/ou **en ce que** le dérivé réactif d'acide aminoalkylcarboxylique est choisi parmi les lactames desdits acides aminoalkylcarboxyliques et leurs mélanges.

5. Utilisation selon l'une quelconque des revendications précédentes, **caractérisée en ce que** le polymère est un composé ou un mélange de plusieurs composés de formule générale (I), 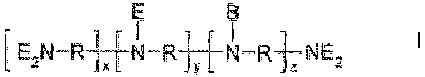 dans la
R représente un radical alkylène linéaire ou ramifié ayant de 2 à 4 atomes de carbone ou des mélanges de ceux-ci,
B pour un point de ramification,
x représente un nombre de 1 à 200, y représente un nombre de 1 à 200 et z représente un nombre de 0 à 100, étant entendu que la somme x+y+z est choisie de telle sorte que le poids moléculaire moyen du noyau de polyalkylèneimine se situe dans la plage de 400 g/mol à 10 000 g/mol, et
E représente H ou un groupe de formule générale Il ou des mélanges de ceux-ci, 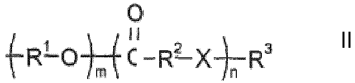 dans la
R¹ représente un radical alkylène linéaire ou ramifié ayant de 2 à 4 atomes de carbone ou des mélanges de ceux-ci,
m pour un nombre de 3 à 60, en particulier de 20 à 30,
X pour O ou NH,
R² représente un méthylène, un éthylène ou un radical alkylène ou alcénylène mono- ou polyinsaturé, linéaire ou ramifié, ayant de 3 à 11 atomes de carbone, ou des mélanges de ceux-ci,
n représente un nombre de 0 à 100, en particulier de 5 à 15, et
R³ représente H, lorsque n est égal à 0, et pour H, le groupe méthyle, éthyle ou éthényle, un radical alkyle linéaire, ramifié ou cyclique ou un radical alcényle mono- ou polyinsaturé ayant de 3 à 21 atomes de carbone, en particulier de 2 à 10 atomes de carbone, lorsque n est supérieur à 0,
à condition que - dans chaque cas par rapport au nombre de groupes E dans le composé de formule I - au moins 1 %, en particulier 40 % à 100 % des groupes E ne soient pas H et que dans au moins 1 %, en particulier 80 % à 100 % des groupes E, n soit un nombre supérieur à 0.

6. Utilisation selon la revendication 5, **caractérisée en ce qu'**une partie, en particulier pas plus de 30 % par rapport à leur nombre, des atomes d'azote représentés dans la formule I portent un autre substituant R⁵, de sorte qu'il se forme des unités quaternaires de la formule I. 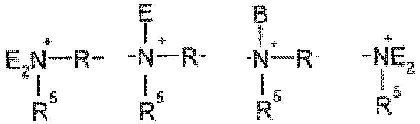 dans lesquelles R⁵ représente O- ou un groupe alkyle linéaire ayant de 1 à 4 atomes de carbone et des contre-anions sont présents en un nombre qui permet d'équilibrer les charges positives des atomes d'azote du polymère.
